# FASCICULE DE BREVET EUROPEEN

(11) **EP 3 209 563 B1**
(45) Date de publication et mention de la délivrance du brevet: **01.08.2018**
(21) Numéro de dépôt: 15793869.7
(22) Date de dépôt: 15.10.2015
(51) Int. Cl.: B64D 33/00, B64C 27/12, F01D 15/10, F02C 9/42, B64D 27/02

(54) **SYSTEME PROPULSIF HYBRIDE D'UN AERONEF MULTI-MOTEUR**
HYBRIDANTRIEBSSYSTEM FÜR EIN MEHRMOTORIGES FLUGZEUG
HYBRID PROPULSION SYSTEM FOR A MULTI-ENGINE AIRCRAFT

(30) Priorité: 20.10.2014 FR 1460058
(43) Date de publication de la demande: 30.08.2017
(73) Titulaire: Safran Helicopter Engines, 64510 Bordes (FR)
(72) Inventeur: MOULON, Frédéric, 64000 Pau (FR); MERCIER-CALVAIRAC, Fabien, 64000 Pau (FR); LE MAUX, David, 64110 Mazères-Lezons (FR)
(74) Mandataire: Desormiere, Pierre-Louis
(86) Numéro de dépôt international: PCT/FR2015/052770
(87) Numéro de publication internationale: WO 2016/062945

(56) Documents cités:
- EP-A2- 0 234 055
- EP-A2- 2 581 586
- EP-A2- 2 636 596
- FR-A1- 2 962 404
- FR-A1- 2 967 133
- FR-A1- 2 992 630
- FR-A1- 2 993 243
- FR-A1- 2 997 382
- FR-A1- 3 003 514

## Description

### Domaine technique

L'invention s'inscrit dans le domaine des turbomachines à turbine libre, comme on en trouve couramment sur les hélicoptères.

Pour mémoire, une turbomachine (parfois désignée par le sigle TAG comme acronyme de turbine à gaz) à turbine libre comprend une turbine de puissance ou turbine libre qui, dans un hélicoptère, entraîne les rotors de celui-ci par l'intermédiaire d'une roue libre et d'une boîte de transmission principale (encore désignée par l'acronyme BTP), et par ailleurs un générateur de gaz constitué principalement d'un compresseur, d'une chambre de combustion et d'une turbine haute pression.

Un réducteur mécanique ou boîte d'accessoires permet de relier l'arbre du générateur de gaz à une machine électrique (désignée en abrégé par MEL) constituée d'un stator et d'un rotor, pouvant fonctionner indifféremment en moteur (démarreur) ou en génératrice. Dans le mode moteur, la machine électrique est alimentée par une source d'énergie électrique et développe un couple moteur de manière à entraîner en rotation le générateur de gaz de la turbomachine, notamment dans le but d'en assurer le démarrage et le mode de veille, en effectuant ainsi une assistance au générateur de gaz. Dans le mode génératrice, la machine électrique est entraînée en rotation par le générateur de gaz de manière à prélever sur ce dernier une puissance mécanique qui est ensuite convertie en puissance électrique pour alimenter un réseau de bord basse tension continue de l'aéronef en vol (encore désigné par l'acronyme RDB). Le RDB est en général relié à un dispositif de stockage d'électricité basse tension, par exemple une batterie de stockage 28 volts.

L'invention concerne plus particulièrement un système propulsif hybridé d'un aéronef multi-moteur, en particulier bimoteur ou trimoteur, c'est-à-dire un système comprenant au moins une turbomachine pouvant être mise en régime de veille pendant une phase de vol dénommée « phase de vol économique », tandis qu'une ou plusieurs autres turbomachines sont maintenues actives.

### Etat de la technique

Quand un aéronef muni de deux turbomachines est en situation de vol de croisière, il a été proposé dans les documents FR2967132 et FR2967133 de mettre une des deux turbomachines dans un régime de veille de manière à désynchroniser sa turbine libre de la boîte de transmission tout en augmentant le régime de l'autre turbomachine, ce qui permet de diminuer la consommation en carburant globale du système.

L'invention se situe ainsi notamment dans le contexte d'une réduction de la consommation d'un hélicoptère au moins bimoteur, dans lequel en vol de croisière économique, c'est-à-dire dans une phase de vol caractérisée par une puissance demandée à chaque moteur assez faible se traduisant par une consommation spécifique (en abrégé CS) très élevée, une des turbines est mise en veille de telle manière que l'autre moteur fonctionne à régime élevé et bénéficie de ce fait d'une consommation spécifique beaucoup plus faible.

Plusieurs variantes de ce régime de veille ont été proposées.

Dans un régime de veille, appelé « ralenti usuel », la chambre de combustion est allumée et l'arbre du générateur de gaz tourne à une vitesse comprise entre 60 et 80% de la vitesse nominale.

Dans une première variante, appelée « super ralenti », le générateur de gaz de la turbine à gaz désynchronisée peut être régulé à un régime de ralenti faible, où l'arbre du générateur de gaz tourne à une vitesse comprise entre 20 et 60% de la vitesse nominale.

Dans une seconde variante, appelée « super ralenti assisté », le générateur de gaz de la turbine à gaz désynchronisée de la BTP peut également être régulé à un régime de ralenti faible, et simultanément un couple moteur d'assistance est appliqué au générateur de gaz par l'intermédiaire de la machine électrique et de la boîte d'accessoires.

Dans une troisième variante, la chambre de combustion de la turbomachine peut être totalement éteinte, et il est alors proposé de maintenir le générateur de gaz en rotation à une vitesse permettant de faciliter le rallumage à l'issue de la phase de vol de croisière. La gamme des vitesses adaptées peut être qualifiée de fenêtre d'allumage préférentielle. Ce mode de fonctionnement, appelé mode « vireur », est une assistance prolongée du générateur de gaz. L'arbre du générateur de gaz tourne, assisté mécaniquement, à une vitesse comprise entre 5 et 20% de la vitesse nominale.

Dans ces modes de fonctionnement, qui sont susceptibles d'être maintenus pendant toute la durée de vol de croisière, la puissance transmise à la BTP par la turbomachine en veille est généralement nulle, et il n'est en général pas possible de prélever de puissance sur son générateur de gaz.

Dans les variantes qui viennent d'être évoquées, il est nécessaire d'être en mesure de réactiver rapidement la turbomachine désynchronisée, notamment en situation d'urgence, par exemple en cas de panne d'une autre turbomachine, s'il y a trois turbomachines ou plus au total, - ou de l'autre turbomachine si les turbomachines sont au nombre de deux. C'est notamment la raison du maintien du générateur de gaz en rotation à une vitesse facilitant le rallumage dans le système où la chambre de combustion est éteinte.

Le maintien du générateur de gaz en rotation dans la fenêtre d'allumage préférentielle (mode « vireur ») et l'assistance prolongée au générateur de gaz régulé au ralenti (mode « super ralenti assisté ») exigent quant à eux une puissance assez faible, l'intérêt du système résidant dans son utilisation pendant une grande durée de vol.

Il a été proposé dans les documents FR2967132 et FR2967133, entre autres solutions, d'utiliser un démarreur électrique alimenté par un démarreur/générateur relié au générateur de gaz de l'autre turbomachine, ou un générateur entraîné directement ou indirectement par la turbine libre de l'autre turbomachine.

Quant au redémarrage d'urgence à partir d'une situation de faible régime ou de chambre de combustion éteinte, il requiert d'appliquer sur l'arbre du générateur de gaz une puissance élevée en raison de l'inertie importante des ensembles tournants et du couple résistant du compresseur de la turbomachine. Cette puissance doit être délivrée pendant une durée brève, de l'ordre de quelques secondes, afin de garantir un démarrage rapide de la turbomachine.

Il a été suggéré dans le document FR2967133 d'utiliser, entre autres solutions, une source d'énergie électrique, en particulier un supercondensateur, afin d'alimenter une machine électrique qui fournit une assistance ponctuelle au générateur de gaz.

Dans le document EP2581586, il a aussi été proposé d'utiliser deux supercondensateurs (qui sont des organes de stockage électrique), qui sont chacun chargés respectivement par un générateur électrique entraîné par le générateur de gaz d'une des deux turbomachines, et qui servent chacun, ponctuellement, pour démarrer l'autre turbomachine à partir d'un état éteint de celle-ci.

Le document FR 2 993 243 divulgue un système propulsif hybride d'un aéronef multi-moteur. Le document EP 0 234 055 divulgue un dispositif de démarrage pour un moteur d'aéronef comprenant des chaines électrotechniques.

La présente invention a notamment pour objet, dans ce contexte, de fournir un moyen technique pratique de réaliser, sur un aéronef qui soit a minima bimoteur, la fonction de « réactivation rapide » depuis un mode économique de la turbine, en utilisant en lieu et place du démarreur électrique conventionnel un système électrotechnique alimenté par le réseau de bord ou par un réseau spécifique d'alimentation en énergie électrique et permettant d'assurer différents modes de fonctionnement qui sont :
- Le démarrage au sol de la turbine à gaz,
- Le mode économique, où une turbomachine est mise en mode veille, qui est un mode économique en énergie et qui ne délivre pas de la puissance mécanique au rotor de l'aéronef,
- La réactivation normale en vol de la turbine, qui était préalablement en mode économique, qui constitue un démarrage fiabilisé depuis le mode veille, sans contrainte de temps importante, et
- La réactivation rapide en vol de la turbine, qui était préalablement en mode économique, ce qui constitue un démarrage d'urgence permettant, sur un temps minimum, la mise en puissance de la turbomachine depuis le mode veille, c'est-à-dire sa sortie rapide du régime de veille pour atteindre un régime, dit régime nominal, dans lequel la turbomachine fournit une puissance mécanique à la boîte de transmission de puissance.

Un régime de sortie de veille d'urgence est un régime dans lequel la chambre de combustion est allumée et l'arbre du générateur de gaz est entraîné vers une vitesse comprise entre 80 et 105%, dans un délai inférieur à 10s après une commande de sortie de veille.

Un régime de sortie de veille normale est un régime dans lequel la chambre de combustion est allumée et l'arbre du générateur de gaz est entraîné vers une vitesse comprise entre 80 et 105%, dans un délai compris entre 10 s et 1 mn après une commande de sortie de veille.

Une turbomachine apte à fonctionner dans un mode de veille est qualifiée de turbomachine hybride.

L'hybridation de systèmes propulsifs permet d'augmenter leur rendement. En revanche, la masse des composants électrotechniques actuels rend leur utilisation difficile pour des applications embarquées sur aéronef.

Il est ainsi nécessaire de concevoir et développer une architecture dimensionnée au plus juste pour proposer un système propulsif capable de voler en croisière économique, où la puissance nécessaire au vol est délivrée par un minimum de turbomachines, les autres étant mises en mode veille, tout en permettant à une turbomachine de sortir efficacement de son mode veille, par une réactivation normale ou une réactivation rapide.

Il est en outre nécessaire, pour des questions de fiabilité, de pouvoir effectuer régulièrement des essais du système de réactivation et de répondre à toutes les exigences de sécurité de fonctionnement et de certification des systèmes propulsifs.

Les architectures de systèmes propulsifs d'aéronefs hybridés proposées jusqu'à présent sont complexes et impliquent des masses embarquées importantes, ou ne permettent pas d'effectuer des essais des équipements assurant la réactivation rapide ou ne répondent pas aux exigences de fiabilité et de disponibilité nécessaires

### Exposé de l'invention

Afin de remédier aux inconvénients précités, conformément à l'invention, il est proposé un système propulsif hybridé d'un aéronef multi-moteur, comprenant une pluralité de turbomachines à turbine libre équipées chacune d'un générateur de gaz, parmi lesquelles au moins une première turbomachine, dite turbomachine hybride, est apte à fonctionner dans au moins un régime de veille au cours d'un vol stabilisé de l'aéronef, tandis que d'autres turbomachines de ladite pluralité de turbomachines fonctionnent seules au cours de ce vol stabilisé, la turbomachine hybride étant associée à au moins une première chaîne électrotechnique comprenant une première machine électrique pouvant fonctionner en démarreur et en génératrice, elle-même connectée à un premier module d'électronique de puissance, lui-même sélectivement connecté à un réseau spécifique d'alimentation en énergie électrique, tel qu'un réseau de bord, et à au moins un premier organe de stockage d'énergie électrique, ladite turbomachine hybride étant en outre associée à une deuxième chaîne électrotechnique identique à ladite première chaîne électrotechnique et comprenant une deuxième machine électrique pouvant fonctionner en démarreur et en génératrice, elle-même connectée à un deuxième module d'électronique de puissance, lui-même sélectivement connecté audit réseau spécifique d'alimentation en énergie électrique et à au moins un deuxième organe de stockage d'énergie électrique, caractérisé en ce que chacune des première et deuxième chaînes électrotechniques est adaptée pour délivrer une puissance maximale au moins égale à la moitié de la puissance totale (Prr) nécessaire à une réactivation rapide de ladite turbomachine hybride et en ce que chacune des première et deuxième chaînes électrotechniques est adaptée de manière à pouvoir délivrer à la turbomachine hybride de façon sélective, soit une puissance de démarrage ou une puissance de réactivation normale (Pdem), soit une puissance de veille (Pv), soit une demi-puissance de veille (Pv/2), soit une demi-puissance de réactivation rapide (Prr/2).

De préférence, la puissance de démarrage ou puissance de réactivation normale est de l'ordre de 20% de la puissance totale de réactivation rapide (Prr).

De préférence, la puissance de veille est de l'ordre de 3 à 5% de la puissance totale de réactivation rapide (Prr).

Selon un aspect de l'invention, chacun des premier et deuxième modules d'électronique de puissance est adapté de manière à pouvoir recevoir de la puissance respectivement du premier ou du deuxième organe de stockage d'énergie électrique pour alimenter respectivement de façon isolée et en alternance avec l'autre desdits premier et deuxième modules d'électronique de puissance, chacune des première et deuxième machines électriques avec une puissance de démarrage ou une puissance de réactivation normale (Pdem).

Selon un autre aspect de l'invention, chacun des premier et deuxième modules d'électronique de puissance est adapté de manière à pouvoir recevoir de la puissance respectivement du premier ou du deuxième organe de stockage d'énergie électrique pour alimenter respectivement et simultanément avec l'autre desdits premier et deuxième modules d'électronique de puissance, chacune des première et deuxième machines électriques avec une demi-puissance de réactivation rapide (Prr/2).

Selon encore un autre aspect de l'invention, chacun des premier et deuxième modules d'électronique de puissance est adapté de manière à pouvoir recevoir de la puissance dudit réseau spécifique d'alimentation en énergie électrique pour alimenter respectivement, et simultanément avec l'autre desdits premier et deuxième modules d'électronique de puissance, la première et la deuxième machine électrique, soit avec une demi-puissance de démarrage ou une demi-puissance de réactivation normale (Pdem/2), soit avec une demi-puissance de veille (Pv/2).

A titre de variante, chacun des premier et deuxième modules d'électronique de puissance est adapté de manière à pouvoir recevoir de la puissance respectivement du premier ou du deuxième organe de stockage d'énergie électrique pour alimenter respectivement, et simultanément avec l'autre desdits premier et deuxième modules d'électronique de puissance, la première et la deuxième machine électrique, soit avec une demi-puissance de démarrage ou une demi-puissance de réactivation normale (Pdem/2), soit avec une demi-puissance de veille (Pv/2).

Selon encore un autre aspect de l'invention, chacun des premier et deuxième modules d'électronique de puissance est adapté de manière à pouvoir recevoir de la puissance dudit réseau spécifique d'alimentation en énergie électrique pour alimenter respectivement de façon isolée et en alternance avec l'autre desdits premier et deuxième modules d'électronique de puissance, la première et la deuxième machine électrique, soit avec une puissance de démarrage ou une puissance de réactivation normale (Pdem), soit avec une puissance de veille (Pv).

Selon encore un autre aspect de l'invention, chacun des premier et deuxième modules d'électronique de puissance est adapté de manière à pouvoir recevoir de la puissance dudit réseau spécifique d'alimentation en énergie électrique ou respectivement du premier ou du deuxième organe de stockage d'énergie électrique pour alimenter respectivement de façon isolée et en alternance avec l'autre desdits premier et deuxième modules d'électronique de puissance, ou de façon simultanée la première et la deuxième machine électrique, avec une puissance variable (Pvar), inférieure ou égale à la moitié de la puissance totale (Prr) nécessaire à une réactivation rapide de ladite turbomachine hybride, afin de pouvoir effectuer des tests de puissance de façon périodique.

Selon un mode particulier de réalisation, les premier et deuxième organes de stockage d'énergie électrique comprennent deux organes de stockage dissociés physiquement.

Selon un autre mode de réalisation possible, les premier et deuxième organes de stockage d'énergie électrique comprennent deux organes de stockage distincts mais regroupés physiquement.

L'invention concerne également un aéronef multi-moteur, comprenant un système propulsif hybridé tel qu'évoqué ci-dessus.

L'aéronef peut être un hélicoptère.

### Brève description des figures

D'autres caractéristiques et avantages de l'invention ressortiront de la description détaillée de modes de réalisation particuliers de l'invention, en référence aux dessins annexés, sur lesquels :
- La figure 1 présente un schéma d'une architecture hybridée d'un système propulsif pour une turbomachine avec deux chaînes électrotechniques de commande selon un premier mode de réalisation de l'invention,
- La figure 2 présente un schéma d'une architecture hybridée d'un système propulsif pour une turbomachine avec deux chaînes électrotechniques de commande selon un deuxième mode de réalisation de l'invention,
- La figure 3 présente un schéma montrant le fonctionnement de l'architecture hybridée de la figure 1 en mode de veille avec une seule chaîne électrotechnique de commande active,
- La figure 4 présente un schéma montrant le fonctionnement de l'architecture hybridée de la figure 1 en mode de veille avec deux chaînes électrotechniques de commande actives,
- La figure 5 présente un schéma montrant le fonctionnement de l'architecture hybridée de la figure 1 en mode de démarrage ou de réactivation normale avec une seule chaîne électrotechnique de commande active alimentée par un réseau de bord,
- La figure 6 présente un schéma montrant le fonctionnement de l'architecture hybridée de la figure 1 en mode de démarrage ou de réactivation normale avec une seule chaîne électrotechnique de commande active alimentée par un organe de stockage d'énergie électrique,
- La figure 7 présente un schéma montrant le fonctionnement de l'architecture hybridée de la figure 1 en mode de démarrage ou de réactivation normale avec deux chaînes électrotechniques de commande actives alimentées par le réseau de bord,
- La figure 8 présente un schéma montrant le fonctionnement de l'architecture hybridée de la figure 1 en mode de réactivation rapide avec deux chaînes électrotechniques de commande actives alimentées par des organes de stockage d'énergie électrique, et
- La figure 9 présente un schéma montrant le fonctionnement de l'architecture hybridée de la figure 1 en mode de conduite de tests de puissance variable avec deux chaînes électrotechniques de commande actives alimentées par le réseau de bord et par des organes de stockage d'énergie électrique.

### Description détaillée

Le système propulsif hybridé d'un aéronef multi-moteur selon l'invention comprend une pluralité de turbomachines à turbine libre équipées chacune d'un générateur de gaz, parmi lesquelles au moins une première turbomachine, ou turbomachine hybride, est apte à fonctionner dans au moins un régime de veille au cours d'un vol stabilisé de l'aéronef, tandis que d'autres turbomachines de la pluralité de turbomachines fonctionnent seules au cours de ce vol stabilisé.

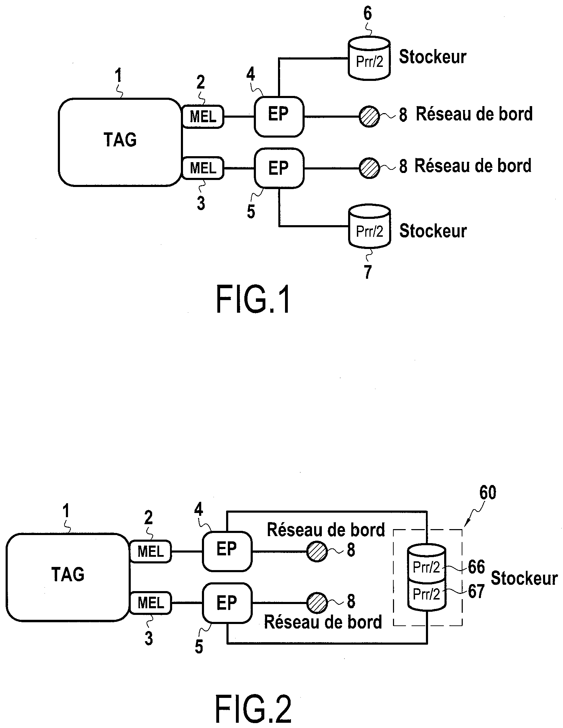

Sur les figures 1 à 9, on a représenté cette seule turbomachine hybride 1 et les chaînes électrotechniques de commande de cette turbomachine hybride, les autres turbomachines utilisées pouvant être classiques. Toutefois, il est également possible, sur un même aéronef, de mettre en oeuvre plusieurs turbomachines hybrides analogues à la turbomachine hybride 1 décrite en référence aux dessins annexés. L'invention peut ainsi s'appliquer à l'ensemble des turbomachines d'une architecture multi-moteur d'un aéronef.

Si l'on se réfère à la figure 1, on voit que la turbomachine hybride 1 est associée à des première et deuxième chaînes électrotechniques identiques comprenant chacune une machine électrique 2 respectivement 3 pouvant fonctionner en démarreur et en génératrice, elle-même connectée à un module d'électronique de puissance 4 respectivement 5, lui-même sélectivement connecté à un réseau spécifique 8 d'alimentation en énergie électrique, tel qu'un réseau de bord, et à au moins un organe de stockage d'énergie électrique 6 respectivement 7.

Chacune des chaînes électrotechniques est adaptée pour délivrer une puissance maximale au moins égale à la moitié de la puissance totale Prr nécessaire à une réactivation rapide de la turbomachine hybride 1.

Sur la figure 1, on a représenté des premier et deuxième organes de stockage d'énergie électrique 6, 7 qui comprennent deux organes de stockage qui sont dissociés physiquement et permettent chacun de délivrer au moins la moitié de la puissance et de l'énergie totale nécessaire à une réactivation rapide de la turbomachine 1, ou qui permettent chacun de fournir la puissance nécessaire à une réactivation normale de la turbomachine 1.

Toutefois, comme représenté sur la figure 2, les premier et deuxième organes de stockage d'énergie électrique peuvent comprendre deux organes de stockage distincts 66, 67 et isolés l'un de l'autre, mais regroupés physiquement dans une entité physique unique 60 et constituant chacun la moitié de cette entité.

Les organes de stockage 6, 7 ou 66, 67, encore dénommés plus simplement « stockeurs », peuvent être de nature électrochimique ou électrostatique.

Chacune des première et deuxième chaînes électrotechniques est adaptée de manière à pouvoir délivrer à la turbomachine hybride 1 de façon sélective, soit une puissance de démarrage ou une puissance de réactivation normale Pdem, soit une puissance de veille Pv, soit une demi-puissance de veille Pv/2, soit une demi-puissance de réactivation rapide Prr/2.

La puissance de démarrage ou puissance de réactivation normale est généralement de l'ordre de 20% de la puissance totale de réactivation rapide Prr.

La puissance de veille est généralement de l'ordre de 3 à 5% de la puissance totale de réactivation rapide Prr.

Chaque module d'électronique de puissance dédié 4, 5 est capable dans un temps limité d'alimenter la machine électrique correspondante 2, 3 avec au moins la moitié de la puissance nécessaire à la réactivation rapide, c'est-à-dire Prr/2, ou la puissance nécessaire à la réactivation normale Pdem (qui correspond également à une puissance de démarrage).

Chaque module d'électronique de puissance dédié 4 ; 5 est lui-même alimenté en énergie soit par le stockeur correspondant 6, 66 ; 7, 67, soit par le réseau de bord 8 de l'aéronef, soit par les deux en même temps. Il est à noter que la puissance disponible à partir du réseau de bord 8 est a priori limitée puisque ce réseau de bord 8 doit fournir également la puissance électrique nécessaire pour tous les systèmes embarqués.

Chaque module d'électronique de puissance dédié 4, 5 est également capable d'alimenter en continu la machine électrique correspondante 2, 3 pour son utilisation dans le mode veille de la turbomachine 1 et est également adapté pour piloter la machine électrique correspondante 2, 3 pour la procédure de démarrage fiabilisé ou de réactivation normale.

Chacune des machines électriques 2, 3 est adaptée pour délivrer au moins la moitié de la puissance nécessaire à une réactivation rapide et la puissance nécessaire pour une réactivation normale.

Par ailleurs, chaque machine électrique 2, 3 qui entraîne le générateur de gaz d'une turbomachine hybridée 1, est capable de maintenir en continu celui-ci en mode veille, de démarrer la turbomachine 1 et de faire de la réactivation normale.

La turbomachine 1 est équipée d'une boîte d'accessoires permettant d'accueillir les deux machines électriques 2, 3, en plus des équipements standards nécessaires au bon fonctionnement de la turbomachine 1.

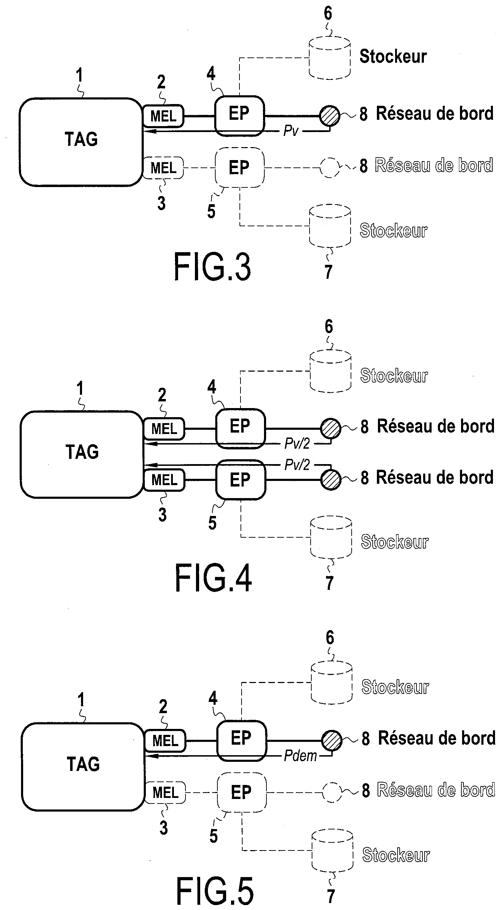

On décrira maintenant en référence aux figures 3 à 9 différents modes de fonctionnement de l'architecture selon l'invention. Dans ces figures, les éléments non actifs de l'architecture sont représentés en pointillés, tandis que les éléments actifs de l'architecture sont représentés de façon normale en traits continus.

Les figures 3 et 4 montrent comment le mode de veille de la turbomachine 1 peut être réalisé par les deux chaînes électrotechniques selon deux modes de réalisation différents, où l'énergie est dans tous les cas prélevée sur le réseau de bord 8.

Comme illustré sur la figure 3, la puissance Pv nécessaire au mode de veille, qui représente environ de 3 à 5% de la puissance totale Prr disponible, peut être délivrée de manière alternative entre les deux chaînes électrotechniques et les missions.

Sur la figure 3, on a représenté comme active la chaîne électrotechnique comprenant la première machine électrique 2 et le premier module d'électronique de puissance 4 alimenté par le réseau de bord 8, tandis que la deuxième machine électrique 3, le deuxième module d'électronique de puissance 5, et les stockeurs 6 et 7 ne sont pas sollicités. Dans une mission suivante de l'aéronef, les rôles seraient inversés et ce serait la deuxième machine électrique 3 et le deuxième module d'électronique de puissance 5 alimenté par le réseau de bord 8 qui seraient actifs, tandis que la première machine électrique 2, le premier module d'électronique de puissance 4, et les stockeurs 6 et 7 ne seraient pas sollicités.

La figure 4 montre un mode de réalisation dans lequel, en mode de veille de la turbomachine 1, les deux chaînes électrotechniques sont simultanément actives, mais ne délivrent chacune qu'une puissance Pv/2 égale à la moitié de la puissance Pv nécessaire au mode de veille, c'est-à-dire de l'ordre de 1 à 3% de la puissance totale Prr. Les première et deuxièmes machines électriques 2, 3 et les premier et deuxième modules d'électronique de puissance 4, 5 sont ainsi simultanément actifs à partir du réseau de bord 8, tandis que les stockeurs 6, 7 ne sont pas sollicités.

Les figures 5 à 7 montrent comment le mode de démarrage ou de réactivation normale de la turbomachine 1 peut être réalisé par les deux chaînes électrotechniques selon trois modes de réalisation différents.

Dans le premier mode de réalisation illustré sur la figure 5, l'énergie correspondant à une puissance mécanique ou de réactivation normale Pdem, qui est typiquement de l'ordre de 20% de la puissance totale Prr nécessaire pour une réactivation rapide, est prélevée sur le réseau de bord 8 et une seule chaîne électrotechnique est utilisée.

Sur la figure 5, on a représenté comme active la chaîne électrotechnique comprenant la première machine électrique 2 et le premier module d'électronique de puissance 4 alimenté par le réseau de bord 8, tandis que la deuxième machine électrique 3, le deuxième module d'électronique de puissance 5, et les stockeurs 6 et 7 ne sont pas sollicités. Dans une mission suivante de l'aéronef, les rôles seraient inversés et ce serait la deuxième machine électrique 3 et le deuxième module d'électronique de puissance 5 alimenté par le réseau de bord 8 qui seraient actifs, tandis que la première machine électrique 2, le premier module d'électronique de puissance 4, et les stockeurs 6 et 7 ne seraient pas sollicités.

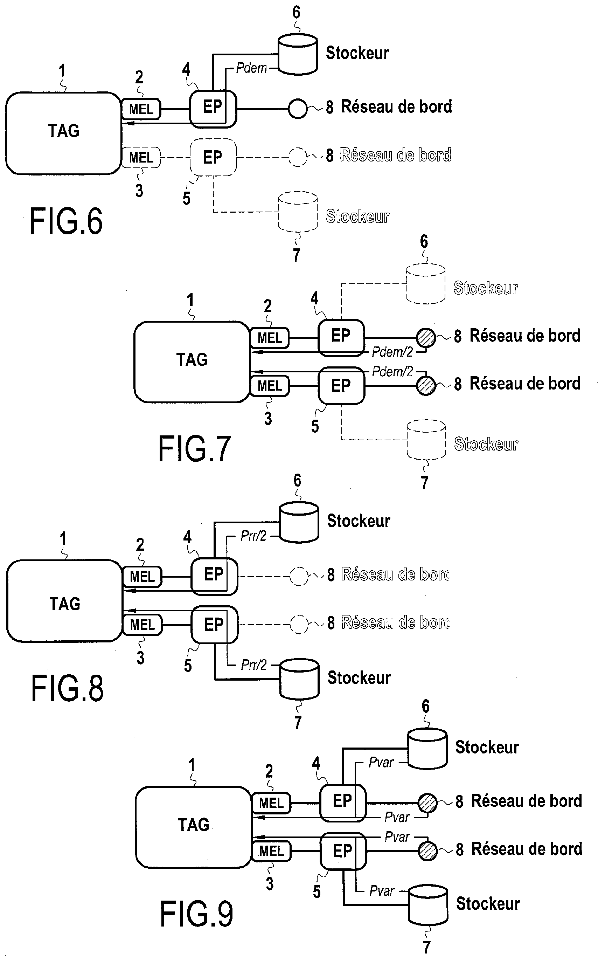

Le mode de réalisation de la figure 6 est analogue à celui de la figure 5, dans la mesure où une seule chaîne électrotechnique est utilisée, mais l'énergie correspondant à une puissance mécanique ou de réactivation normale Pdem, qui est typiquement de l'ordre de 20% de la puissance totale Prr nécessaire pour une réactivation rapide, est prélevée non pas sur le réseau de bord 8, mais sur un stockeur.

Sur la figure 6, on a représenté comme active la chaîne électrotechnique comprenant la première machine électrique 2 et le premier module d'électronique de puissance 4 alimenté par le stockeur 6, tandis que la deuxième machine électrique 3, le deuxième module d'électronique de puissance 5, le stockeur 7 et le réseau de bord 8 ne sont pas sollicités pour cette opération. Dans une mission suivante de l'aéronef, les rôles seraient inversés et ce serait la deuxième machine électrique 3 et le deuxième module d'électronique de puissance 5 alimenté par le stockeur 7 qui seraient actifs, tandis que la première machine électrique 2, le premier module d'électronique de puissance 4, le stockeur 6 et le réseau de bord 8 ne seraient pas sollicités.

Naturellement, lorsque le mode de réalisation de la figure 2 est mis en oeuvre, le stockeur 66 et le stockeur 67 jouent le rôle des stockeurs 6 et 7 respectivement.

La figure 7 montre un mode de réalisation dans lequel, en mode de démarrage ou de réactivation normale de la turbomachine 1, les deux chaînes électrotechniques sont simultanément actives, mais ne délivrent chacune qu'une puissance Pdem/2 égale à la moitié de la puissance Pdem nécessaire au mode de veille, c'est-à-dire typiquement de l'ordre de 20% de la puissance totale Prr. Les première et deuxièmes machines électriques 2, 3 et les premier et deuxième modules d'électronique de puissance 4, 5 sont ainsi simultanément actifs.

Sur la figure 7, on a représenté des liaisons montrant que l'énergie est prélevée par les premier et deuxième modules d'électronique de puissance 4, 5 à partir du réseau de bord 8, tandis que les stockeurs 6, 7 ne sont pas sollicités.

Toutefois, à titre de variante, dans le cas du mode de réalisation de la figure 7, où les deux chaînes électrotechniques sont simultanément actives, les premier et deuxième modules d'électronique de puissance 4, 5 pourraient prélever l'énergie correspondant à Pdem/2 respectivement à partir des stockeurs 6 et 7 (ou 66 et 67 si le mode de réalisation de la figure 2 est utilisé) et non pas à partir du réseau de bord 8.

La figure 8 montre un mode de réalisation dans lequel, en mode de réactivation rapide de la turbomachine 1, les deux chaînes électrotechniques sont simultanément actives, dans un fonctionnement simultané et coordonné, mais ne délivrent chacune qu'une puissance Prr/2 égale à la moitié de la puissance totale Prr nécessaire au mode de réactivation rapide. Les première et deuxièmes machines électriques 2, 3 et les premier et deuxième modules d'électronique de puissance 4, 5 sont ainsi simultanément actifs.

Dans le cas du mode de réalisation de la figure 8, l'énergie est prélevée par les premier et deuxième modules d'électronique de puissance 4, 5 en premier lieu sur les stockeurs 6 et 7 (ou 66 et 67 dans le cas du mode de réalisation de la figure 2), à parts égales avec une puissance de l'ordre de Prr/2. Toutefois, un complément de puissance peut le cas échéant être prélevé, par les premier et deuxième modules d'électronique de puissance 4, 5, sur le réseau de bord 8.

La figure 9 illustre une configuration de l'architecture de la figure 1, dans laquelle on procède à un test en appliquant une puissance variable Pvar, où Pvar peut varier entre une puissance quasi nulle et une puissance égale à la moitié de la puissance totale Prr, pour chaque chaîne électrotechnique complète afin de garantir le bon fonctionnement et les performances du système.

Ce test est de préférence fait lors de chaque démarrage au sol du système propulsif de l'aéronef, mais peut être également fait en vol si besoin.

L'énergie nécessaire aux essais de bon fonctionnement peut être fournie selon le cas par le réseau de bord 8, ou par les organes de stockage d'énergie 6, 7 ou 66, 67.

Les essais peuvent être réalisés de manière alternative ou simultanée avec les deux chaînes électrotechniques.

Sur la figure 9, on a symbolisé à titre d'exemple le cas où toutes les branches de toutes les chaînes électrotechniques font l'objet de tests simultanés avec une puissance variable Pvar qui est ainsi délivrée par les stockeurs 6, 7 et par le réseau de bord 8 à chacun des modules d'électronique de puissance 4, 5.

La présente invention apporte différents avantages par rapport aux solutions existantes et permet notamment :
- Un test ponctuel de réactivation toutes les deux missions pour chaque chaîne électrotechnique grâce à la procédure de démarrage avant chaque mission en alternant l'utilisation des chaînes électrotechniques ;
- Un test permanent de fonctionnement de la chaîne électrotechnique grâce au mode veille qui utilise la ou les chaînes électrotechniques et qui fait tourner les machines électriques en permanence lors de l'utilisation du mode économique ;
- Une ségrégation des chaînes électrotechniques est assurée notamment pour la partie stockage d'énergie par la mise en oeuvre de deux stockeurs identiques 6, 7 dissociés physiquement et adaptés pour stocker chacun la moitié de l'énergie maximale requise (Prr/2) ou par la mise en oeuvre d'un stockeur unique 60 regroupant deux stockeurs identiques 66, 67 adaptés pour stocker chacun la moitié de l'énergie maximale requise (Prr/2), ces deux stockeurs identiques 66, 67 étant dans une même unité physique avec une isolation entre eux ;
- Une redondance du mode de réactivation normale grâce aux deux chaînes électrotechniques indépendantes ;
- Une redondance des sources d'alimentation dans la mesure où la réactivation normale peut être obtenue soit à partir d'un stockeur 6,7 ou 66, 67 soit à partir du réseau de bord 8, selon la disponibilité de ces sources ;
- Un dimensionnement minimisé et optimisé des deux chaînes électrotechniques qui permet d'additionner les puissances des deux chaînes électrotechniques pour obtenir la puissance nécessaire à la réactivation rapide (voir la figure 8).

D'une façon générale, l'invention n'est pas limitée aux modes de réalisation présentés, mais s'étend à toutes les variantes dans le cadre de la portée des revendications annexées.

## Revendications

1. Système propulsif hybridé d'un aéronef multi-moteur, comprenant une pluralité de turbomachines à turbine libre équipées chacune d'un générateur de gaz, parmi lesquelles au moins une première turbomachine (1), dite turbomachine hybride, est apte à fonctionner dans au moins un régime de veille au cours d'un vol stabilisé de l'aéronef, tandis que d'autres turbomachines de ladite pluralité de turbomachines fonctionnent seules au cours de ce vol stabilisé, la turbomachine hybride (1) étant associée à au moins une première chaîne électrotechnique du système, comprenant une première machine électrique (2) pouvant fonctionner en démarreur et en génératrice, elle-même connectée à un premier module (4) d'électronique de puissance, lui-même sélectivement connecté à un réseau spécifique (8) d'alimentation en énergie électrique, tel qu'un réseau de bord, et à au moins un premier organe de stockage d'énergie électrique (6), ladite turbomachine hybride (1) étant en outre associée à une deuxième chaîne électrotechnique du système, identique à ladite première chaîne électrotechnique et comprenant une deuxième machine électrique (3) pouvant fonctionner en démarreur et en génératrice, elle-même connectée à un deuxième module (5) d'électronique de puissance, lui-même sélectivement connecté audit réseau spécifique (8) d'alimentation en énergie électrique et à au moins un deuxième organe de stockage d'énergie électrique (7), **caractérisé en ce que** chacune des première et deuxième chaînes électrotechniques est adaptée pour délivrer une puissance maximale au moins égale à la moitié de la puissance totale (Prr) nécessaire à une réactivation rapide de ladite turbomachine hybride (1) sur un temps minimum,
et **en ce que** chacune des première et deuxième chaînes électrotechniques est adaptée de manière à pouvoir délivrer à la turbomachine hybride (1) de façon sélective, soit une puissance de démarrage ou une puissance de réactivation normale (Pdem), soit une puissance de veille (Pv), la puissance de veille correspondant à la puissance nécessaire au mode de veille de ladite turbomachine hybride (1) qui ne délivre pas de puissance mécanique, soit une demi-puissance de veille (Pv/2), soit une demi-puissance de réactivation rapide (Prr/2), la puissance de réactivation rapide correspondant à la puissance totale nécessaire à la réactivation rapide de la turbomachine hybride.

2. Système propulsif hybridé selon la revendication 1, **caractérisé en ce que** ladite puissance de démarrage ou puissance de réactivation normale est de l'ordre de 20% de la puissance totale de réactivation rapide (Prr).

3. Système propulsif hybridé selon la revendication 1, **caractérisé en ce que** ladite puissance de veille est de l'ordre de 3 à 5% de la puissance totale de réactivation rapide (Prr).

4. Système propulsif hybridé selon la revendication 1, **caractérisé en ce que** chacun des premier et deuxième modules (4, 5) d'électronique de puissance est adapté de manière à pouvoir recevoir de la puissance respectivement du premier ou du deuxième organe de stockage d'énergie électrique (6, 7) pour alimenter respectivement de façon isolée et en alternance avec l'autre desdits premier et deuxième modules (4, 5) d'électronique de puissance, chacune des première et deuxième machines électriques (2, 3) avec une puissance de démarrage ou une puissance de réactivation normale (Pdem).

5. Système propulsif hybridé selon la revendication 1, **caractérisé en ce que** chacun des premier et deuxième modules (4, 5) d'électronique de puissance est adapté de manière à pouvoir recevoir de la puissance respectivement du premier ou du deuxième organe de stockage d'énergie électrique (6, 7) pour alimenter respectivement et simultanément avec l'autre desdits premier et deuxième modules (4, 5) d'électronique de puissance, chacune des première et deuxième machines électriques (2, 3) avec une demi-puissance de réactivation rapide (Prr/2).

6. Système propulsif hybridé selon la revendication 1, **caractérisé en ce que** chacun des premier et deuxième modules (4, 5) d'électronique de puissance est adapté de manière à pouvoir recevoir de la puissance dudit réseau spécifique (8) d'alimentation en énergie électrique pour alimenter respectivement, et simultanément avec l'autre desdits premier et deuxième modules (4, 5) d'électronique de puissance, la première et la deuxième machine électrique (2, 3), soit avec une demi-puissance de démarrage ou une demi-puissance de réactivation normale (Pdem/2), soit avec une demi-puissance de veille (Pv/2).

7. Système propulsif hybridé selon la revendication 1, **caractérisé en ce que** chacun des premier et deuxième modules (4, 5) d'électronique de puissance est adapté de manière à pouvoir recevoir de la puissance respectivement du premier ou du deuxième organe de stockage d'énergie électrique (6, 7) pour alimenter respectivement, et simultanément avec l'autre desdits premier et deuxième modules (4, 5) d'électronique de puissance, la première et la deuxième machine électrique (2, 3), soit avec une demi-puissance de démarrage ou une demi-puissance de réactivation normale (Pdem/2), soit avec une demi-puissance de veille (Pv/2).

8. Système propulsif hybridé selon la revendication 1, **caractérisé en ce que** chacun des premier et deuxième modules (4, 5) d'électronique de puissance est adapté de manière à pouvoir recevoir de la puissance dudit réseau spécifique (8) d'alimentation en énergie électrique pour alimenter respectivement de façon isolée et en alternance avec l'autre desdits premier et deuxième modules (4, 5) d'électronique de puissance, la première et la deuxième machine électrique (2, 3), soit avec une puissance de démarrage ou une puissance de réactivation normale (Pdem), soit avec une puissance de veille (Pv).

9. Système propulsif hybridé selon la revendication 4, **caractérisé en ce que** chacun des premier et deuxième modules (4, 5) d'électronique de puissance est adapté de manière à pouvoir recevoir de la puissance dudit réseau spécifique (8) d'alimentation en énergie électrique ou respectivement du premier ou du deuxième organe de stockage d'énergie électrique (6, 7) pour alimenter respectivement de façon isolée et en alternance avec l'autre desdits premier et deuxième modules (4, 5) d'électronique de puissance ou de façon simultanée, la première et la deuxième machine électrique (2, 3), avec une puissance variable (Pvar) inférieure ou égale à la moitié de la puissance totale (Prr) nécessaire à une réactivation rapide de ladite turbomachine hybride (1).

10. Système propulsif hybridé selon l'une quelconque des revendications 1 à 9, **caractérisé en ce que** les premier et deuxième organes de stockage d'énergie électrique (6, 7) comprennent deux organes de stockage dissociés physiquement.

11. Système propulsif hybridé selon l'une quelconque des revendications 1 à 9, **caractérisé en ce que** les premier et deuxième organes de stockage d'énergie électrique (6, 7) comprennent deux organes de stockage distincts mais regroupés physiquement.

12. Aéronef multi-moteur, comprenant un système propulsif hybridé selon l'une quelconque des revendications 1 à 11.

## Patentansprüche

1. Hybridisiertes Antriebssystem eines mehrmotorigen Luftfahrzeugs, umfassend eine Vielzahl von Turbomaschinen mit Freilaufturbine, die jeweils mit einem Gasgenerator ausgestattet sind, unter denen wenigstens eine erste Turbomaschine (1), sogenannte Hybridturbomaschine, geeignet ist, im Laufe eines stabilisierten Fluges des Luftfahrzeugs in wenigstens einem Bereitschaftsbetriebszustand zu arbeiten, während andere Turbomaschinen der Vielzahl von Turbomaschinen im Laufe dieses stabilisierten Fluges alleine arbeiten, wobei die Hybridturbomaschine (1) wenigstens einer ersten elektrotechnischen Kette des Systems zugeordnet ist, welche eine erste elektrische Maschine (2) umfasst, die als Starter und als Generator arbeiten kann, die selbst mit einem ersten Leistungselektronik-Modul (4) verbunden ist, das selbst wahlweise mit einem spezifischen Netz (8) zur Versorgung mit elektrischer Energie, wie einem Bordnetz, und mit wenigstens einem ersten Organ zur Speicherung elektrischer Energie (6) verbunden ist, wobei die Hybridturbomaschine (1) ferner einer zweiten elektrotechnischen Kette des Systems zugeordnet ist, die mit der ersten elektrotechnischen Kette identisch ist und eine zweite elektrische Maschine (3) umfasst, die als Starter und als Generator arbeiten kann, die selbst mit einem zweiten Leistungselektronik-Modul (5) verbunden ist, das selbst wahlweise mit dem spezifischen Netz (8) zur Versorgung mit elektrischer Energie und mit wenigstens einem zweiten Organ zur Speicherung elektrischer Energie (7) verbunden ist, **dadurch gekennzeichnet, dass** eine jede der ersten und zweiten elektrotechnischen Ketten dazu ausgelegt ist, eine maximale Leistung zu liefern, die wenigstens gleich der Hälfte der Gesamtleistung (Prr) ist, die für eine schnelle Reaktivierung der Hybridturbomaschine (1) über eine minimale Zeitdauer erforderlich ist, und dass eine jede der ersten und zweiten elektrotechnischen Ketten so ausgelegt ist, dass sie der Hybridturbomaschine (1) selektiv entweder eine Startleistung oder eine Leistung zur normalen Reaktivierung (Pdem) oder eine Bereitschaftsleistung (Pv), wobei die Bereitschaftsleistung der Leistung entspricht, die für den Bereitschaftsbetriebszustand der Hybridturbomaschine (1) erforderlich ist, der keine mechanische Leistung liefert, oder eine halbe Bereitschaftsleistung (Pv/2) oder eine halbe Leistung zur schnellen Reaktivierung (Prr/2) liefern kann, wobei die Leistung zur schnellen Reaktivierung der Gesamtleistung entspricht, die für die schnelle Reaktivierung der Hybridturbomaschine erforderlich ist.

2. Hybridisiertes Antriebssystem nach Anspruch 1, **dadurch gekennzeichnet, dass** die Startleistung oder Leistung zur normalen Reaktivierung in der Größenordnung von 20 % der Gesamtleistung zur schnellen Reaktivierung (Prr) liegt.

3. Hybridisiertes Antriebssystem nach Anspruch 1, **dadurch gekennzeichnet, dass** die Bereitschaftsleistung in der Größenordnung von 3 bis 5 % der Gesamtleistung zur schnellen Reaktivierung (Prr) liegt.

4. Hybridisiertes Antriebssystem nach Anspruch 1, **dadurch gekennzeichnet, dass** ein jedes der ersten und zweiten Leistungselektronik-Module (4, 5) so ausgelegt ist, dass es Leistung des ersten bzw. des zweiten Organs zur Speicherung elektrischer Energie (6, 7) aufnehmen kann, um jeweils isoliert und abwechselnd mit dem anderen der ersten und zweiten Leistungselektronik-Module (4, 5) eine jede der ersten und zweiten elektrischen Maschinen (2, 3) mit einer Startleistung oder einer Leistung zur normalen Reaktivierung (Pdem) zu versorgen.

5. Hybridisiertes Antriebssystem nach Anspruch 1, **dadurch gekennzeichnet, dass** ein jedes der ersten und zweiten Leistungselektronik-Module (4, 5) so ausgelegt ist, dass es Leistung des ersten bzw. des zweiten Organs zur Speicherung elektrischer Energie (6, 7) aufnehmen kann, um jeweils und gleichzeitig mit dem anderen der ersten und zweiten Leistungselektronik-Module (4, 5) eine jede der ersten und zweiten elektrischen Maschinen (2, 3) mit einer halben Leistung zur schnellen Reaktivierung (Prr/2) zu versorgen.

6. Hybridisiertes Antriebssystem nach Anspruch 1, **dadurch gekennzeichnet, dass** ein jedes der ersten und zweiten Leistungselektronik-Module (4, 5) so ausgelegt ist, dass es Leistung von dem spezifischen Netz (8) zur Versorgung mit elektrischer Energie aufnehmen kann, um jeweils und gleichzeitig mit dem anderen der ersten und zweiten Leistungselektronik-Module (4, 5) die erste und die zweite elektrische Maschine (2, 3) entweder mit einer halben Startleistung oder einer halben Leistung zur normalen Reaktivierung (Pdem/2) oder mit einer halben Bereitschaftsleistung (Pv/2) zu versorgen.

7. Hybridisiertes Antriebssystem nach Anspruch 1, **dadurch gekennzeichnet, dass** ein jedes der ersten und zweiten Leistungselektronik-Module (4, 5) so ausgelegt ist, dass es Leistung des ersten bzw. des zweiten Organs zur Speicherung elektrischer Energie (6, 7) aufnehmen kann, um jeweils und gleichzeitig mit dem anderen der ersten und zweiten Leistungselektronik-Module (4, 5) die erste und die zweite elektrische Maschine (2, 3) entweder mit einer halben Startleistung oder einer halben Leistung zur normalen Reaktivierung (Pdem/2) oder mit einer halben Bereitschaftsleistung (Pv/2) zu versorgen.

8. Hybridisiertes Antriebssystem nach Anspruch 1, **dadurch gekennzeichnet, dass** ein jedes der ersten und zweiten Leistungselektronik-Module (4, 5) so ausgelegt ist, dass es Leistung von dem spezifischen Netz (8) zur Versorgung mit elektrischer Energie aufnehmen kann, um jeweils isoliert und abwechselnd mit dem anderen der ersten und zweiten Leistungselektronik-Module (4, 5) die erste und die zweite elektrische Maschine (2, 3) entweder mit einer Startleistung oder einer Leistung zur normalen Reaktivierung (Pdem) oder mit einer Bereitschaftsleistung (Pv) zu versorgen.

9. Hybridisiertes Antriebssystem nach Anspruch 4, **dadurch gekennzeichnet, dass** ein jedes der ersten und zweiten Leistungselektronik-Module (4, 5) so ausgelegt ist, dass es Leistung des spezifischen Netzes (8) zur Versorgung mit elektrischer Energie oder des ersten bzw. des zweiten Organs zur Speicherung elektrischer Energie (6, 7) aufnehmen kann, um jeweils isoliert und abwechselnd mit dem anderen der ersten und zweiten Leistungselektronik-Module (4, 5), oder gleichzeitig, die erste und die zweite elektrische Maschine (2, 3) mit einer variablen Leistung (Pvar), welche geringer als die oder gleich der Hälfte der für eine schnelle Reaktivierung der Hybridturbomaschine (1) erforderlichen Gesamtleistung (Prr) ist, zu versorgen.

10. Hybridisiertes Antriebssystem nach einem der Ansprüche 1 bis 9, **dadurch gekennzeichnet, dass** das erste und das zweite Organ zur Speicherung elektrischer Energie (6, 7) zwei physisch getrennte Speicherorgane umfassen.

11. Hybridisiertes Antriebssystem nach einem der Ansprüche 1 bis 9, **dadurch gekennzeichnet, dass** das erste und das zweite Organ zur Speicherung elektrischer Energie (6, 7) zwei getrennte, aber physisch zusammengefasste Speicherorgane umfassen.

12. Mehrmotoriges Luftfahrzeug, das ein hybridisiertes Antriebssystem nach einem der Ansprüche 1 bis 11 umfasst.

## Claims

1. A hybrid propulsion system for a multi-engine aircraft, the system comprising a plurality of free-turbine engines each having a gas generator, and including at least one first engine (1), referred to as a "hybrid" engine, that is suitable for operating in at least one standby mode during stabilized flight of the aircraft, while other engines of said plurality of engines operate alone during such stabilized flight, the hybrid engine (1) being associated with at least one first electric powertrain of the system comprising a first electrical machine (2) capable of operating as a starter and as a generator, itself connected to a first electronic power module (4), itself selectively connected to a specific electrical power supply network (8), such as an onboard network, and to at least one first electrical energy storage member (6), said hybrid engine (1) also being associated with a second electric powertrain of the system identical to said first electric powertrain and comprising a second electrical machine (3) capable of operating as a starter and as a generator, itself connected to a second electronic power module (5), itself selectively connected to said specific electrical power supply network (8) and to at least one second electrical energy storage member (7), the system being **characterized in that** each of the first and second electric powertrains is adapted to deliver a maximum power not less than half the total power (Prr) needed for rapid reactivation of said hybrid engine (1) with a minimum delay and **in that** each of the first and second electric powertrains is adapted to be capable of delivering to the hybrid engine (1) in selective manner either normal reactivation power or starting power (Pdem), or else standby power (Pv), the standby power corresponding to the power needed for the hybrid engine standby mode in which no mechanical power is delivered, or else half standby power (Pv/2), or else half rapid reactivation power (Prr/2), the rapid reactivation power corresponding to the total power needed for rapid reactivation of the hybrid engine.

2. A hybrid propulsion system according to claim 1, **characterized in that** said normal reactivation power or starting power is of the order of 20% of the total rapid reactivation power (Prr).

3. A hybrid propulsion system according to claim 1, **characterized in that** said standby power is of the order of 3% to 5% of the total rapid reactivation power (Prr).

4. A hybrid propulsion system according to claim 1, **characterized in that** each of the first and second electronic power modules (4, 5) is adapted to be capable of receiving power respectively from the first or the second electrical energy storage member (6, 7) in order to power respectively in isolated manner and in alternation with the other of said first and second electronic power modules (4, 5), each of the first and second electrical machines (2, 3) with normal reactivation power or starting power (Pdem).

5. A hybrid propulsion system according to claim 1, **characterized in that** each of the first and second electronic power modules (4, 5) is adapted to be capable of receiving power respectively from the first or the second electrical energy storage member (6, 7) for powering respectively and simultaneously with the other of said first and second electronic power modules (4, 5), each of the first and second electrical machines (2, 3) with half rapid reactivation power (Prr/2).

6. A hybrid propulsion system according to claim 1, **characterized in that** each of the first and second electronic power modules (4, 5) is adapted to be capable of receiving power from said specific electrical power supply network (8) in order to power respectively and simultaneously with the other of said first and second electronic power modules (4, 5) the first and second electrical machines (2, 3) either with half starting power or with half normal reactivation power (Pdem/2), or with half standby power (Pv/2).

7. A hybrid propulsion system according to claim 1, **characterized in that** each of the first and second electronic power modules (4, 5) is adapted to be capable of receiving power respectively from the first or the second electrical energy storage member (6, 7) in order to power respectively and simultaneously with the other of said first and second electronic power modules (4, 5) the first and second electrical machines (2, 3), either with half normal reactivation power or half starting power (Pdem/2), or else with half standby power (Pv/2).

8. A hybrid propulsion system according to claim 1, **characterized in that** each of the first and second electronic power modules (4, 5) is adapted to be capable of receiving power from said specific electrical power supply network (8) in order to power respectively in isolated manner and in alternation with the other of said first and second electronic power modules (4, 5), the first and the second electrical machines (2, 3) either with normal reactivation power or starting power (Pdem), or else with standby power (Pv).

9. A hybrid propulsion system according to claim 4, **characterized in that** each of the first and second electronic power modules (4, 5) is adapted to be capable of receiving power from said specific electrical power supply network (8) or respectively from the first or the second electrical energy storage member (6, 7) in order to power respectively in isolated manner and in alternation with the other of said first and second electronic power modules (4, 5), or in simultaneous manner, the first and second electrical machines (2, 3) with variable power (Pvar) less than or equal to half the total power (Prr) needed for rapid reactivation of said hybrid engine (1).

10. A hybrid propulsion system according to any one of claims 1 to 9, **characterized in that** the first and second electrical energy storage members (6, 7) comprise two storage members that are physically dissociated.

11. A hybrid propulsion system according to any one of claims 1 to 9, **characterized in that** the first and second electrical energy storage members (6, 7) comprise two storage members that are distinct but physically grouped together.

12. A multi-engine aircraft having a hybrid propulsion system according to any one of claims 1 to 11.
